**Europäisches Patentamt**

**European Patent Office**

**Office européen des brevets**

(11) Veröffentlichungsnummer: **0 129 062**
**A2**

## EUROPÄISCHE PATENTANMELDUNG

(21) Anmeldenummer: **84105561.9**

(22) Anmeldetag: **16.05.84**

(51) Int. Cl.³: **G 01 B 11/00**

(30) Priorität: **18.05.83 DE 3318042**
**24.03.84 DE 3410959**

(43) Veröffentlichungstag der Anmeldung:
**27.12.84 Patentblatt 84/52**

(84) Benannte Vertragsstaaten:
**AT BE CH DE FR GB IT LI LU NL SE**

(71) Anmelder: **Selbach, Gerd, Prof. Dipl.-Ing.**
**Taubenstrasse 18**
**D-4006 Erkrath 1(DE)**

(72) Erfinder: **Selbach, Gerd, Prof. Dipl.-Ing.**
**Taubenstrasse 18**
**D-4006 Erkrath 1(DE)**

(74) Vertreter: **Röbe-Oltmanns, Georg, Dr.**
**Dotzheimer Strasse 61**
**D-6200 Wiesbaden(DE)**

(54) **Lasermesssystem, insbesondere zum Ausmessen von Einspann- und Richtvorgängen an Werkzeugmaschinen sowie zur Schwingungsmessung.**

(57) Die Erfindung betrifft ein Lasermeßsystem, insbesondere zum Ausmessen von Einspann- und Richtvorgängen an Werkzeugmaschinen mit Werkstücken großer Abmessungen, sowie zur Schwingungsmessung an Werkstücken.

Es ist Aufgabe der Erfindung, ein Lasermeßsystem zu schaffen, mit dem es möglich ist, Präzisionsmessungen an Bauteilen großer Abmessungen, beispielsweise beim Einspannen und Ausrichten von auf Werkzeugmaschinen befindlichen Werkstücken, sowie schwingungsmessungen an Bauteilen durchzuführen, wobei das Justieren des Lasermeßsystems einfach zu bewerkstelligen sein soll.

Erfindungsgemäß wird die Aufgabe dadurch gelöst, daß das Lasermeßsystem aus einem Lasermeßgerät, einem Koordinatenwächter, einer Kalibrierungsreferenz, einem Meßbett und einer Ablenkjustage besteht.

FIG.5

Anmelder: Professor Dipl.-Ing. Gerd Selbach
Taubenstraße 18, 4006 Erkrath 1

Lasermeßsystem, insbesondere zum Ausmessen
von Einspann- und Richtvorgängen an Werkzeugmaschinen
sowie zur Schwingungsmessung

Die Erfindung betrifft ein Lasermeßsystem, insbesondere zum Ausmessen von Einspann- und Richtvorgängen an Werkzeugmaschinen mit Werkstücken großer Abmessungen, sowie zur Schwingungsmessung an Werkstücken.

Lasermeßsysteme zeichnen sich unter Laborbedingungen durch die Interferometrie und die Geradlinigkeit der Strahlausbreitung aus. Der Einsatz von Lasermeßsystemen außerhalb der Labors scheitert hingegen oftmals an der Empfindlichkeit des Laserstrahles gegen externe Einflüsse, wie Luftfeuchte, Temperatur und Turbulenz, die sich den geräteinternen Wärmedehnungen des Spiegelsystems, der Laserröhre wie auch der Lagerungsgenauigkeit der Ablenkungselemente überlagern. Die hohe Ausgangsgenauigkeit des Laserstrahles kann bis in die Unbrauchbarkeit hinein verschoben sein.

Unbefriedigend gelöst für den Praktiker in der Werkstatt ist demnach das Problem, daß im Augenblick der Messung das Systemnull nicht bekannt ist. Grundlage der sehr genauen Meßanzeige ist die Vermutung, daß das Null im Augenblick der Messung tatsächlich vorlag, was jedoch allein aufgrund der Turbulenzen nie sicher ist.

Bei der üblichen Werkstattpraxis werden im wesentlichen interferometrische Meßverfahren angewendet. Diese sind aber für die üblichen Werkstattanwendungen nicht geeignet, da neben den beträchtlichen Kosten und rauher Behandlung die Oberflächenrauhigkeit der meisten Werkstücke größer als die Meßgenauigkeit ist. Viele Meßvorgänge in der Werkstatt finden aber gerade in diesem Zustand statt, beispielsweise Einspann- und Richtvorgänge an Werkzeugmaschinen. Das Ausfluchten von Maschinen großer Abmessungen und von schwergewichtigen Werkstücken und deren Aufnahme sind immer noch Arbeiten, die zeitaufwendig mit unzulänglichen Hilfsmitteln vorgenommen werden.

Bekannte Meßsysteme gestatten es ferner nicht, die Verformung von Bauteilen unter Schwingung zu messen, eine Aufgabenstellung, wie sie für lange Wellenleitungen und auch die Gehäuse von Großmaschinen häufig vorliegt.

Es ist Aufgabe der Erfindung, ein Lasermeßsystem zu schaffen, mit dem es möglich ist, Präzisionsmessungen an Bauteilen großer Abmessungen, beispielsweise beim Einspannen und Ausrichten von auf Werkzeugmaschinen befindlichen Werkstücken, sowie Schwingungsmessungen an Bauteilen durchzuführen, wobei das Justieren des Lasermeßsystems einfach zu bewerkstelligen sein soll.

Die Aufgabe wird erfindungsgemäß dadurch gelöst, daß das Lasermeßsystem aus einem Lasermeßgerät, einem Koordinatenwächter, einer Kalibrierungsreferenz, einem Meßbett und einer Ablenkjustage besteht.

Alle Elemente mit Ausnahme der Kalibrierungsreferenz befinden sich auf einem gemeinsamen Fahrgestell, dergestalt, daß das Lasermeßgerät an jedem Arbeitsplatz - betriebsfertig justiert - mit einem oder mehreren arbeitsplatzfesten Koordinatenwächtern verwendet werden kann.

In eingeschaltetem Zustand sendet das Lasermeßgerät zwei Laserstrahlen aus, von denen der eine Laserstrahl das Meßsignal und der andere Laserstrahl das Gerätenullsignal darstellt, wobei die beiden Signale aus einem Strahlengang erzeugt werden. Hierdurch wird erreicht, daß die relative Lage von Meßsignal und Gerätenullsignal fest verbleibt, so daß die externen Einflüsse, wie Luftfeuchte, Temperatur und Turbulenz beide Signale um ein gleiches Maß verschieben und somit die Abweichungen als Meßfehler ausschalten.

Es ist vorgesehen, daß das Gerätenullsignal senkrecht auf den Meßort und das Meßsignal unter einem spitzen Winkel auf den Meßort einfällt. Winkel von etwa 80° gegen die Lotrechte - die Einfallsrichtung des Gerätenullsignals - erzeugen dabei eine sechsfache Verschiebung gegen das Gerätenullsignal je Einheit der Verschiebung in Lotrichtung.

Die für die Werkstattverwendung so wichtige einfache Lesbarkeit des Meßsignals wird entweder durch einen sehr kleinen Abstand zwischen den Spuren von Meßsignal und Gerätenullsignal oder durch eine niederfrequente Modulation des Meßsignals gegenüber dem Gerätenullsignal erzeugt. Die Gaußsche Begrenzung des Laserstrahls kann dabei durch eine entsprechende Gestaltung der Ablenkeinheit im Lasermeßgerät einseitig aufgehoben werden. Bei moduliertem Meßsignal und nicht moduliertem Gerätenullsignal wird die Ablenkeinheit zweckmäßig so eingestellt, daß die Breite des Meßsignals die des Gerätenullsignals nur leicht überschreitet.

Verschiebungen der Mittellinien von Meßsignal und Gerätenullsignal führen damit zu einem leicht erkennbaren Flackern der Begrenzung der überlagerten Signalspuren auf derjenigen Seite, nach der die Verschiebung stattfindet. Die daraus mit dem unbewaffneten Auge, selbst bei einer Sehkraft von 30 % noch erzielbare Meßgenauigkeit beträgt 0,005 mm. Durch die Verwendung von Komplementärfarben kann die Auflösung für das menschliche Auge weiter gesteigert werden. Schließlich ist bei Verwendung optoelektronischer Sensoren eine weitere Steigerung der Meßgenauigkeit erzielbar.

Durch stroposkopische Spreizung von Gerätenullsignal und Meßsignal auf der Oberfläche des zu messenden Gegenstandes werden zudem Schwingungsmessungen ermöglicht.

Gemäß einer besonderen Ausführungsform der Erfindung ist vorgesehen, daß die Laserstrahlen in ihrer Fokussierung verändert werden können. Wird während der Messung die Fokussiereinrichtung des Lasermeßgerätes im gemeinsamen Strahlengang für Meßsignal und Gerätenullsignal betätigt und damit die Fokusentfernung verändert, so sind Meßstrecken von mehreren Metern Länge bei gleichbleibender Genauigkeit zu erfassen. Eine physikalische Grenze für die Meßstrecke ist nicht gegeben. Sie hängt ausschließlich von den optischen Elementen im System des Gerätes ab. Mit dem Lasermeßgerät sind somit Präzisionsmessungen an langen und schwingenden Bauteilen möglich.

Die On-Line-Überwachung der Lage von Meßsignal und Gerätenullsignal zur Bearbeitungsebene und damit zur Werkzeugmaschinengeometrie wird durch eine extrem starke Fokussierung des Meßsignals an einem bestimmten Ort der Maschinenführung erreicht. Durch hohe Winkeländerungsgeschwindigkeiten des Meßsignals in der Nähe dieses Ortes wird eine durch optische Mittel nicht erreichbare Verengung der Spur des Meßsignals auf der Werkzeugmaschinenführung erzeugt. Hierdurch wird der Zentralwert und die unmittelbare Umgebung der im Fokus gaußverteilten Energie als Kontrollsignal verwertet. An dem bestimmten Ort sinkt die Fokusweite dabei etwa eine Zehnerpotenz.

Das Gerät ermöglicht somit eine sehr genaue Ausrichtung von Werkstücken auf Werkzeugmaschinen dergestalt, daß die zu bearbeitende Oberfläche und die Werkzeugbewegungsrichtung direkt, über ein Lasersignal, miteinander gekoppelt werden. Die Überlagerung von Meß- und Gerätenullsignal gestattet die maschinenintegrierte Anwendung während der Bearbeitung und damit die Kontrolle der Bewegungsabläufe und deren Genauigkeit.

Für das Lasermeßgerät wird der bestimmte Ort der Werkzeugmaschinenführung durch den Koordinatenwächter dargestellt. Dieser erfaßt das Kollektiv der Störgrößen aus Geräteaufbau und externen Einflüssen und weist es aus.

Erfindungsgemäß besteht der Koordinatenwächter aus einem um die Achse des einfallenden Laserstrahles drehbaren Drehkörper mit zwei optoelektronischen Sensoren, die über einen Verstärker zwei Meß-geräte ansteuern. Die Sensoren sind dabei auf der Mittellinie des Drehkörpers in gleichem Abstand vom Drehkörpermittelpunkt angeordnet. Die drehbare Vorrichtung ist lateral zur Ebene des einfallenden Laserstrahls verschieblich. Durch Drehung und Lateralverschiebung läßt sich die einfallende Energie so verteilen, daß die nachgeschal-teten Meßgeräte Deckung anzeigen, wenn die durch das einfallende Licht erzeugten Ströme gleich sind. Bei Deckung der Meßgeräte ist der Ausgangspunkt des Meßverfahrens bestimmt.Tritt gegenüber dieser Position eine Abweichung ein, die nur lateral möglich ist, so wird einer der Sensoren stärker, der andere schwächer bestrahlt. Dem entspricht eine gegenläufige Anzeige der Meßgeräte. Ist der Koordinatenwächter am Ausgangspunkt der Messung auf die Schwelle zur Hochempfindlichkeit eingestellt, so werden kleinste Abweichungen angezeigt. Die Kopplung von Dreh- und Lateralbewegung an der Schwelle

5

zur Hochempfindlichkeit hat das Ergebnis, daß ein Sensor und Laserstrahl von endlicher Erstreckung, wie solche von infinitesimaler Erstreckung, reagieren.

Die diesem Zustand entsprechenden, sehr geringen Einstrahlungsintensitäten - es handelt sich um Teilmengen von Laserstrahl und Sensoroberfläche - verlangen die Ausschaltung von Fremd- und Tageslicht. Dem dient ein dritter Sensor, der mit den anderen Sensoren auf einen Differentialverstärker geschaltet ist.

Neben der Meßwertausgabe auf einem lagensympathischen Zeigergerät ist auch die Ausgabe auf einen Oszillographen möglich. Hierbei werden die Auswirkungen von kollektiven Störgrößen quantitativ sichtbar und verwertbar, wobei insbesondere die Korrelation mehrerer Achsen des Lasermeßgerätes dessen Verwendung über große Meßentfernungen sicherstellt.

Vorteilhaft sollte der Koordinatenwächter eine selbständige Stromversorgung aufweisen. Hierdurch ist die Messung weit vom Geber, d.h. vom Lasermeßgerät, entfernt unter normalen Bedingungen möglich.

Während des Justierens des Lasermeßgerätes ruht dieses in einer definierten Position auf dem Meßbett. Das Meßbett hingegen wird während des Justiervorganges bezüglich der Koordinatenwächter ausgerichtet. Das Meßbett weist eine Grundplatte mit drei Stellschrauben in Dreiecksanordnung mit gefederten Spannelementen auf den Wirkungslinien des Spanndreiecks auf, die auf einer Schiene angeordnet sind. Die Drehung der Stellschrauben erzeugt eine Bewegung in einer der drei räumlichen Koordinatenrichtungen und/oder eine Bewegung um die beiden anderen räumlichen Koordinatenrichtungen.

Vorteilhaft ist die Schiene als T-Schiene mit Morsekegeladapter ausgebildet und in T-Spann-Nuten einführbar. Senkrecht zur Erstreckung der Schiene und der Stellschrauben sollten zwei weitere, in Anlage mit der Schiene gelangende, an der Grundplatte angeordnete Stellschrauben vorgesehen sein. Mittels dieser Stellschrauben kann dann eine Bewegung um die erste genannte räumliche Achse erfolgen. Durch die drei erstgenannten Stellschrauben sowie die zwei weiteren Stellschrauben ist damit jede Abweichung korrigierbar, da Korrekturen in Richtung der beiden letztgenannten räumlichen Achsen nie relevant werden .

6

Die Verspannung der T-Schiene in der T-Spann-Nut sollte durch zwischen Schiene und Spann-Nut angeordnete, abgefederte Kugeln bewirkt werden, deren Kalotten den Flansch und den Steg der T-Schiene an deren Verschneidung durchdringen. Eine derartige Anordnung bewirkt ein automatisches Verspannen der Teile.

Voraussetzung für eine exakte Messung mit dem Lasermeßgerät ist es, daß die durch den umlaufenden Laserstrahl gebildete Fläche absolut plan ist. Die Planität der vom abgelenkten Laserstrahl bestimmten Lichtebene hängt von der Genauigkeit einer Ablenkeinheit ab. Bei hohen Genauigkeiten, die im Bereich von $10^{-3}$ mm anzusiedeln sind, sind geeignete Referenzstrecken, die eine Länge im Meterbereich aufweisen sollten, nicht verfügbar. Erfindungsgemäß wird daher vorgeschlagen, daß die Kalibrierungsreferenz als abgehängter, gewichtsbelasteter Draht mit einem Durchmesser $d \geq F/\cos \beta$ mit $\beta = 10$ bis 15° und flüssigkeitsgedämpfter Schwingung ausgebildet ist. Bei diesem Durchmesser werden Abweichungen $\Delta F$ mit dem Kotangens $\beta$ in die räumliche Tiefe des Drahtdurchmessers verstärkt.

Das Lasermeßsystem weist schließlich eine Ablenkjustage auf. Mittels dieser wird die im Lasermeßgerät befindliche Ablenkeinheit so lange verstellt, bis die Kalibrierungsreferenz in voller Länge abgedeckt ist.

Allgemein muß die Justage von Ablenkeinheiten, deren Hauptelement ein rotierender oder oszillierender Spiegel ist, die Grenze zwischen zwei Mantellinien zu finden gestatten, von denen jede einen auf der Spitze - diese gegeneinander - stehenden Kegel beschreibt, wenn die Mantellinie durch einen Laserstrahl dargestellt wird. Im erfindungsgemäßen Lasermeßgerät stehen die Achsen der Ablenkeinheiten wegen der räumlichen Ausdehnung des Gerätes in nicht immer eindeutig definierten räumlichen Koordinaten zueinander. Vorteilhaft wird das Problem der Spiegelverstellung während des Laufes der Ablenkeinheiten dadurch gelöst, daß die Ablenkjustage einen gerätefesten Drehpunkt aufweist, der Nullpunkt für eine Translationsbewegung in zwei Achsen und eine Rotationsbewegung in drei Achsen ist. Der Gleichlauf zwischen der Ablenkjustage und dem rotierenden Spiegelhalter der Ablenkeinheit sollte dabei durch eine Reibkupplung sichergestellt sein.

Weitere Merkmale der Erfindung sind in der Beschreibung der Figuren und in den Unteransprüchen dargestellt, wobei bemerkt wird, daß alle Einzelmerkmale und alle Kombinationen von Einzelmerkmalen Weiterbildungen der Erfindung sind.

In den Figuren ist die Erfindung an einer Ausführungsform beispielsweise dargestellt, ohne auf diese Ausführungsform beschränkt zu sein.

Es stellt dar:

Fig. 1  das Lasermeßgerät in Seitenansicht mit schematischer Darstellung des Strahlengangs im Gerät;

Fig. 1a, 1b, 1c  verschiedene Ausbildungen der erzeugten Laserstrahlen;

Fig. 2  das Lasermeßgerät gemäß der Darstellung in Fig. 1 mit auf ein Werkstück gerichteten Strahlen;

Fig. 3  eine Draufsicht auf das Lasermeßgerät und eine Werkzeugmaschine mit auf das Werkstück gerichteten Strahlen;

Fig. 4  eine Ansicht in Längsrichtung des Werkstückes mit den vom Lasermeßgerät ausgehenden Strahlen;

Fig. 4a, 4b, 4c  verschiedene Strahlbilder auf den Werkstücken;

Fig. 5  eine räumliche Gesamtansicht von Lasermeßgerät, Ablenkjustage, Koordinatenwächter und Meßbett;

Fig. 6  eine räumliche Detailansicht eines Koordinatenwächters;

Fig. 7  eine räumliche Detailansicht der auf dem Meßbett angeordneten Grundplatte mit Einrichtungen zum Justieren der Grundplatte auf einer Schiene;

Fig. 8  eine räumliche Ansicht der Schiene gemäß der Darstellung in Fig. 7;

Fig. 8a  einen Schnitt durch die Schiene entsprechend der Linie A-A in Fig. 8;

Fig. 9  eine schematische Darstellung der Kalibrierungsreferenz;

Fig. 9a  eine Detailansicht des durch einen Laserstrahl angestrahlten Drahtes gemäß der Darstellung in Fig.9;

Fig. 10 eine räumliche Ansicht der Ablenkjustage.

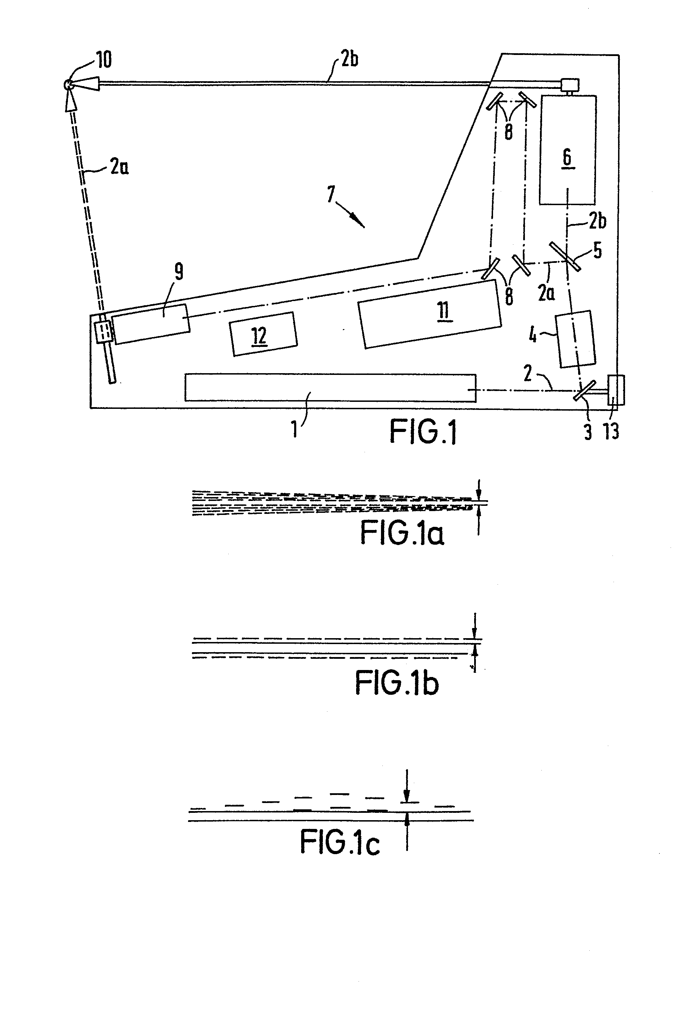

In Fig. 1 ist das Lasermeßgerät schematisch dargestellt.
Es weist im Inneren eine Laserröhre 1 auf. Der von der Laserröhre 1
ausgesandte Laserstrahl 2 trifft auf einen Spiegel 3 und wird in
Richtung eines Strahlaufweiters[4] reflektiert. Der aufgeweitete Strahl
gelangt an einen Strahlteiler 5. Ein Teil 2a des Laserstrahles 2
wird vom Strahlteiler 5 reflektiert, der andere Teil 2b des Laserstrahles 2 tritt durch den Strahlteiler 5 hindurch. Der Strahl 2a
stellt hierbei das Meßsignal dar, der Strahl 2b hingegen das Gerätenullsignal. Das Gerätenullsignal wird einer Ablenkeinheit 6 zugeführt
und verläßt das Lasermeßgerät in Richtung einer lotrechten Ebene.
Das Meßsignal 2a wird nach der Reflexion am Strahlteiler 5 von vier
weiteren Spiegeln 8 reflektiert und gleichfalls einer Ablenkeinheit
9 zugeführt. Das Meßsignal 2a verläßt die Ablenkeinheit 9 unter einem
Winkel von etwa 80° gegen die Lotrechte. Senkrecht zur Zeichenebene
verläuft durch den Punkt 10 die Schnittlinie von Meßsignal 2a und
Gerätenullsignal 2b.

Das Lasermeßgerät 7 weist ferner in seinem Inneren nur
schematisch angedeutet ein Stromversorgungsteil 11 sowie einen Modulator 12 auf. Das Lasermeßgerät 7 ist ferner mit einem Anschluß 13
versehen, der für die Aufnahme von größeren Strahlausweitern und
Fadenkreuzmodulen vorgesehen ist. Mit einer derartigen Zusatzausrüstung ist der Einsatz als Baulaser für Flächen- und Streckennivellierung möglich.

Dem senkrecht auf den Meßort, beispielsweise ein Werkstück,
einfallenden Gerätenullsignal wird das um den spitzen Winkel einfallende Meßsignal überlagert. Ein Winkel von etwa 80° gegen die Lotrechte – die Einfallsrichtung des Gerätenullsignals – erzeugt dabei
eine sechsfache Verschiebung gegen das Gerätenullsignal je Einheit der
Verschiebung in Lotrichtung. Hierdurch lassen sich Werkstücke auf
Werkzeugmaschinen wesentlich genauer als bisher ausrichten.

Die einfache Lesbarkeit des Meßsignals wird weiter durch
einen sehr kleinen Abstand zwischen den Spuren des Meßsignals und des
Gerätenullsignals, oder durch eine niederfrequente Modulation des
Meßsignals gegenüber dem Gerätenullsignal erzeugt. Die Fig. 1a bis
1c zeigen Formen der Verschneidungsspuren auf Werkstückoberflächen.
Fig. 1a zeigt einen einseitig linearisierten Laserstrahl, Fig. 1b
die Überlagerung des modulierten Meßsignals mit dem nichtmodulierten
Gerätenullsignal und Fig. 1c die Überlagerung entsprechend Fig. 1b bei einer Werkstückschwingung. Zwischen den Pfeilen in den Fig. 1a bis 1c sind jeweils die Abstände zwischen den Spuren von Meßsignal und Gerätenullsignal dargestellt.

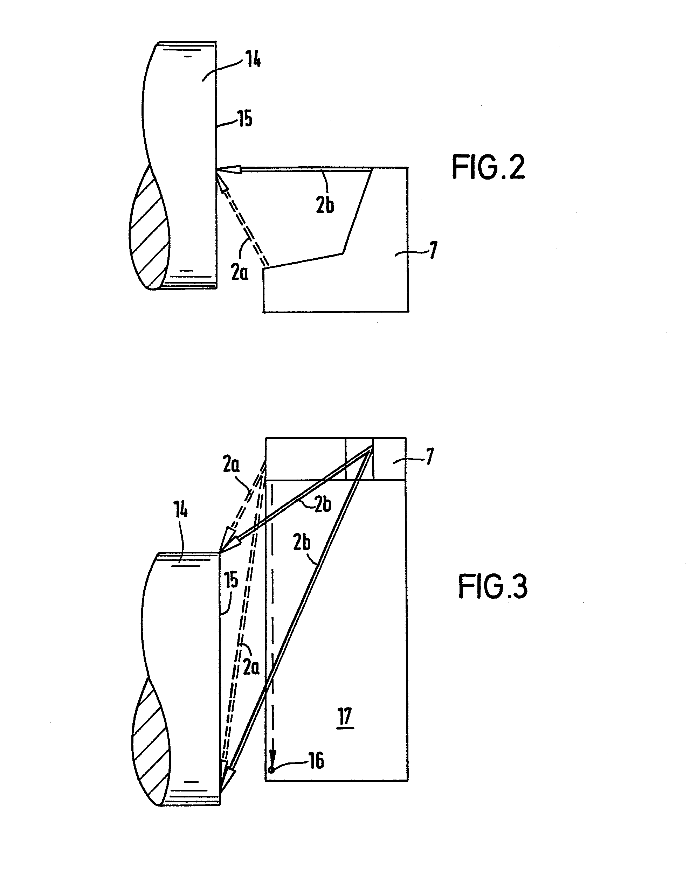

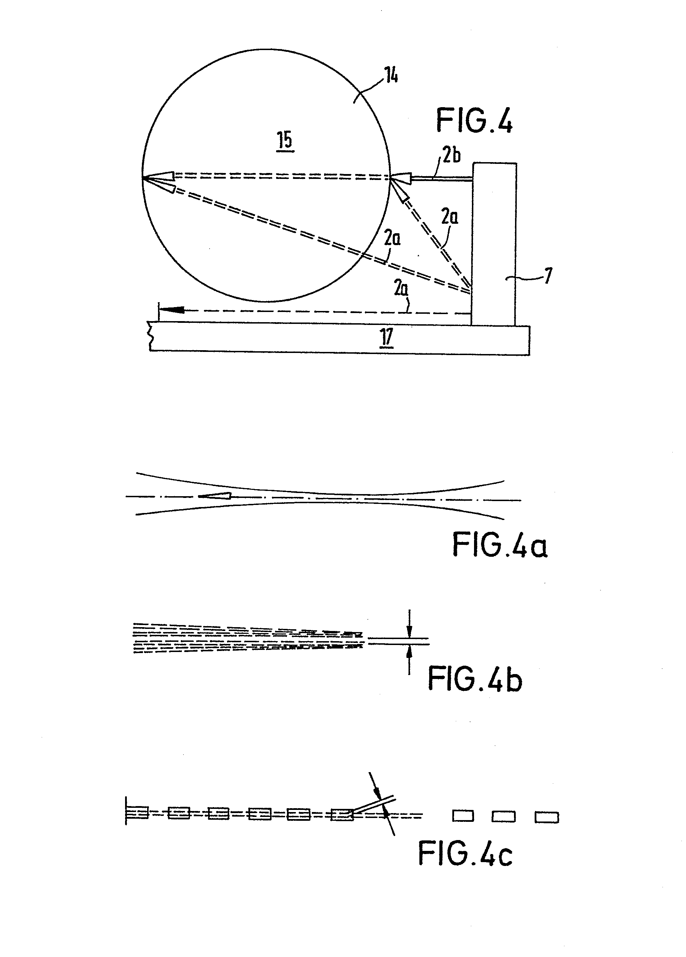

Fig. 2, 3 und 4 zeigen das Lasermeßgerät mit einem Werkstück in verschiedenen Ansichten. Fig. 2 entspricht der Darstellung in Fig. 1, jedoch mit eingezeichnetem Werkstück 14. Fig. 3 und 4 verdeutlichen den Strahlengang der Strahlen 2a und 2b über die Werkstückoberfläche. Fig. 4a, 4b, 4c zeigen die Verschneidungsspuren auf der Werkstückoberfläche. Fig. 4a zeigt einen gaußisch begrenzten Laserstrahl, Fig. 4b entsprechend der Darstellung in Fig. 1a einen einseitig linearisierten Laserstrahl mit zwischen den Pfeilen angedeuteter Meßdistanz sowie Fig. 4c entsprechend der Darstellung in Fig. 1b überlagerte modulierte und nichtmodulierte Signale der gleichfalls zwischen den Pfeilen angeordneten Meßdistanz. Wie insbesondere der Fig. 4 und der Fig. 4c zu entnehmen ist, sind in der Null-Lage die Verschneidungsspuren der Strahlen 2a und 2b auf der Werkstückoberfläche/in Deckung, wobei jede Drehung um die Hochachse des Lasermeßgerätes eine Öffnungsschere der Verschneidungsspuren erzeugen würde, die - da direkt vom Drehwinkel abhängig - Präzisionswinkelmessungen gegen die Null-Lage gestatten würde.

Die On-Line-Überwachung der Lage von Meßsignal 2a und Gerätenullsignal 2b zur Bearbeitungsebene und damit zur Werkzeugmaschinengeometrie wird durch eine extrem starke Fokussierung des Meßsignals 2a an der Werkzeugmaschinenführung im Punkt 16 erreicht. In diesem Punkt befindet sich ein noch näher zu beschreibender Koordinatenwächter. Durch hohe Winkeländerungsgeschwindigkeiten des Meßsignals 2a im Punkt 16 wird eine durch optische Mittel nicht erreichbare Verengung der Spur des Meßsignals auf der Werkzeugführung 17 erzeugt. Aufgrund dieser Eigenschaften ermöglicht das Lasermeßgerät 7 eine sehr genaue Ausrichtung des Werkstücks 14 auf der Werkzeugführung 17, da die zu bearbeitende Oberfläche und die Werkzeugbewegungsrichtung direkt über das Meßsignal 2a miteinander gekoppelt sind.

Die Meßwerterfassung kann sowohl durch das menschliche Auge als auch simultan durch optoelektronische Mittel erfolgen. Durch Gerätezusätze kann eine Linien- und Flächennivellierung ermöglicht werden.

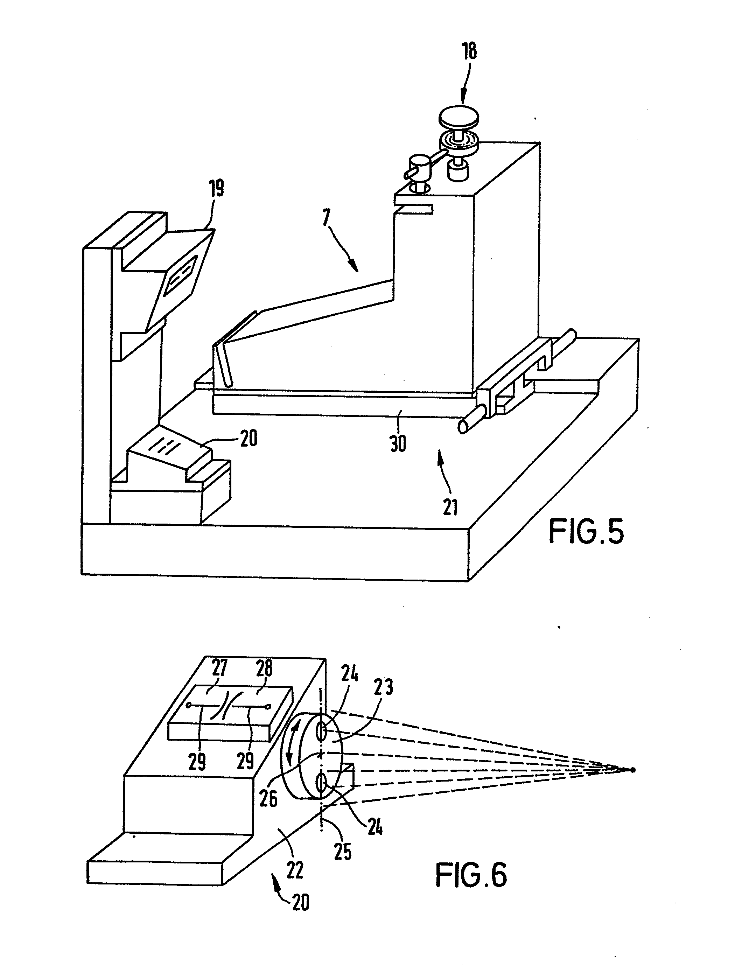

Fig. 5 zeigt eine räumliche Gesamtansicht von Lasermeßgerät

0129062

7, Ablenkjustage 18, Koordinatenwächtern 19 und 20 sowie Meßbett 21. Alle Elemente befinden sich auf einem gemeinsamen Fahrgestell, dergestalt, daß das Lasermeßgerät an jedem Arbeitsplatz, betriebsfertig justiert, mit einem oder mehreren arbeitsplatzfesten Koordinatenwächtern verwendet werden kann.

Anhand der Fig. 5 bis 10 soll die Justage des Lasermeßgeräts 7 erläutert werden:

Fig. 6 zeigt eine räumliche Ansicht eines Koordinatenwächters, wie er beispielsweise in Fig. 5 dargestellt ist oder in Fig.3 in Punkt 16 angeordnet wird. Der Koordinatenwächter - mit der Ziffer 20 bezeichnet - besteht aus einem Gehäuse 22, an dessen einen Seite ein um die Achse eines nicht näher bezeichneten Laserstrahles drehbarer Körper 23 gelagert ist. Der Drehkörper 23 weist zwei optoelektronische Sensoren 24 auf, die auf der Mittellinie 25 des Drehkörpers 23 in gleichem Abstand vom Drehkörpermittelpunkt 26 angeordnet sind. Die Sensoren 24 steuern über einen nicht dargestellten Verstärker zwei Meßgeräte 27 und 28 an.

Die von dem Lasermeßgerät 7 emittierten Laserstrahlen überstreichen während des Umlaufs der Ablenkeinheit 6 bzw. 9 die Sensoren 24, die zunächst mittig stehen. Wegen der endlichen Breite der Sensoren ist in diesem Zustand die Energieverteilung in jedem zu den Sensoren gehörenden Lichtführungskanal unbestimmt. Durch Drehung des Körpers 23 bei gleichzeitiger Lateralverschiebung des Koordinatenwächters 20 wird dann ein Zustand eingestellt, der die Zeiger 29 der Meßgeräte 27 und 28 in Deckung bringt. Abweichungen des Laserstrahls von dieser Einstellung führen dann zu einer unmittelbaren Anzeige durch die Meßgeräte 27 und 28, so daß korrigiert werden kann. Gemessen werden kann mit dem Lasermeßgerät bei Deckung der Zeiger 29 der Meßgeräte 27 und 28. Arbeitsplatzfeste Koordinatenwächter gestatten somit den sofortigen Einsatz des Lasermeßgerätes, wenn dieses auf dem Fahrgestell Deckung der Zeiger 29 aufwies.

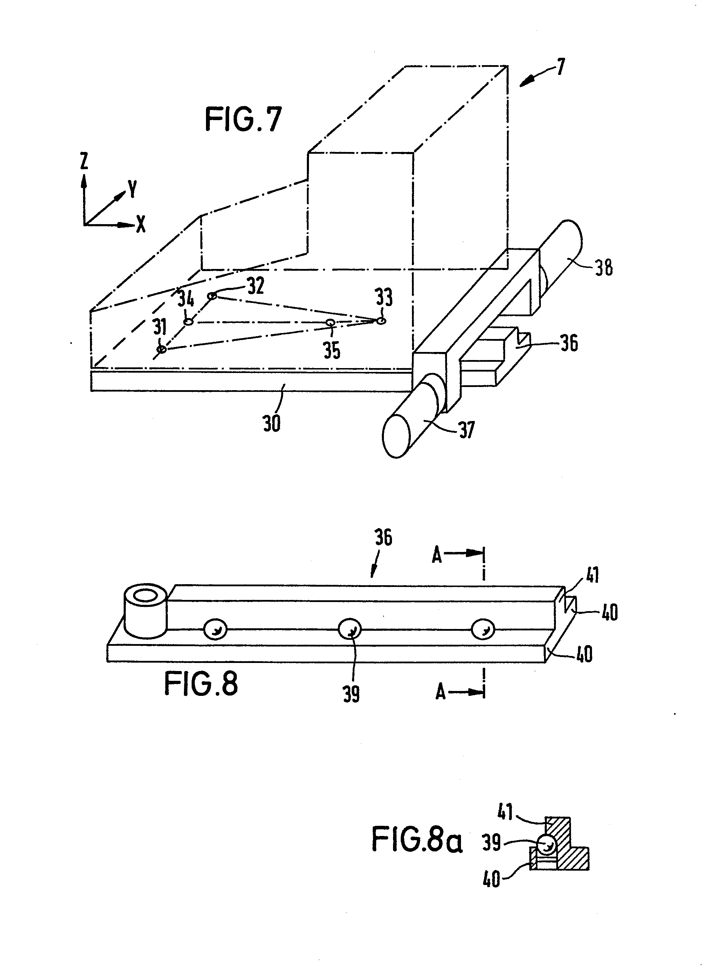

Fig. 5 zeigt in Verbindung mit Fig. 7 die Anordnung des Lasermeßgerätes 7 auf dem Meßbett 21 sowie die Mittel zum Justieren der auf dem Meßbett 21 angeordneten Grundplatte 30. Zum besseren Verständnis sind in der Fig. 7 zusätzlich die Koordinaten x, y und z eingezeichnet. Die Grundplatte 30 nimmt auf ihrer Oberseite das Lasermeßgerät 7 in einer definierten Position auf. Die Grundplatte 30 ist mit drei Stellschrauben 31, 32 und 33 in Dreiecksanordnung versehen mit gefederten Spannelementen 34 und 35 auf den Wirkungslinien des Spanndreiecks. Die Grundplatte 30 ist auf einer T-Schiene
36 angeordnet. Senkrecht zur Erstreckung der T-Schiene 36 und der
Stelschrauben 31, 32 und 33 befinden sich zwei weitere, in Anlage
mit der T-Schiene 36 gelangende, an der Grundplatte 30 angeordnete
Stellschrauben 37 und 38.

Das Kollektiv der Störgrößen aus Geräteaufbau und externen
Einflüssen wird durch die Koordinatenwächter 19 bzw. 20 erfaßt und
ausgewiesen und durch Verstellung der Stellschrauben 31, 32, 33 bzw.
37 und 38 korrigiert. Dabei erfolgt die Korrektur in Richtung der
z-Achse und/oder um die x- und y-Achse durch eine Drehung der Stellschrauben 31, 32 und 33, durch eine Betätigung der Stellschrauben 37
und 38 erfährt die Grundplatte 30 eine Bewegung um die z-Achse.
Somit ist jede Abweichung korrigierbar, da Korrekturen in Richtung
der x- oder y-Achse nie relevant werden.

Fig. 8 zeigt eine räumliche Ansicht der T-Schiene 36 gemäß
der Darstellung in Fig. 7. Die T-Schiene 36 ist mit Morsekegeladapter ausgebildet und in eine nicht dargestellte T-Spann-Nut
einführbar, wobei die Klemmung zwischen T-Schiene 36 und T-Spann-Nut
durch abgefederte Kugeln 39 bewirkt wird, deren Kalotte den Flansch
40 und den Steg 41 der T-Schiene 36 an deren Verschneidung durchdringen (Fig. 8a). Die T-Schiene 36 verspannt sich somit automatisch
in jeder T-Nut mittels der abgefederten Kugeln 39.

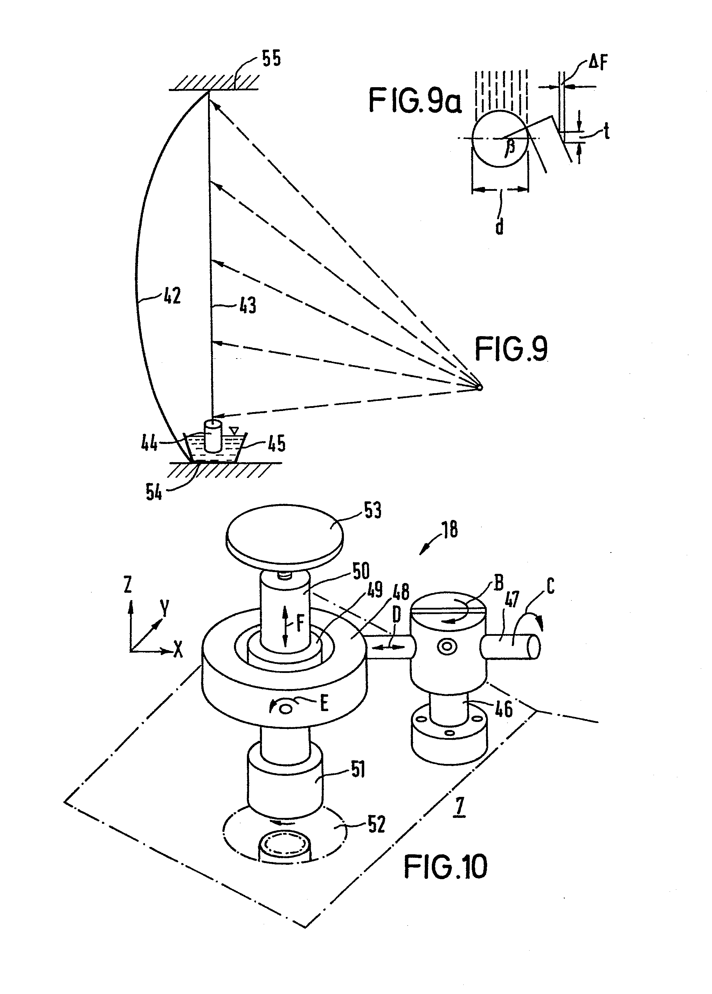

Fig. 9 zeigt eine schematische Darstellung der Kalibrierungsreferenz. Mit 55 ist die Decke, mit 54 der Boden eines Raumes bezeichnet. Zwischen Boden 54 und Decke 55 ist ein Klemmbogen 42 eingespannt. Am oberen Ende des Klemmbogens 42 ist ein Draht 43 befestigt,
der an seinem unteren Ende ein Gewicht 44 aufnimmt. Das Gewicht
taucht in einen mit Flüssigkeit gefüllten Behälter 45 ein. Der Draht
43 stellt somit eine ideale Gerade für die Einstellung der Planität
der durch den umlaufenden Laserstrahl gebildeten, nicht näher bezeichneten Fläche dar. Der Klemmbogen ermöglicht, den abgehängten,
gewichtsbelasteten Draht mit flüssigkeitsgedämpfter Schwingung in beliebiger Länge an jedem Ort eines Raumes zu positionieren. Fig. 9a
zeigt eine Detailansicht des Drahtes 43. Der Draht 43 weist einen
Durchmesser $d = F/\cos 10°$ auf, wobei F den Fokus-durchmesser des
Laserstrahles darstellt. Fig. 9a ist speziell zu entnehmen, daß der
Durchmesser des Laserstrahls geringfügig geringer ist als der Durch- messer des Drahtes. Bei diesem Durchmesser des Drahtes ¬ehen Abweichungen $\Delta F$ mit dem Kotangens $\beta$ in die räumliche Tiefe $t$ des Drahtdurchmessers ein. Ein $\Delta F$ von 0,01 mm stellt sich in der Tiefe als ca. 0,06 mm dar, d.h. doppelt so viel als mit dem bloßen Auge erkennbar ist. Eine zehnfache Lupe gestattet damit eine Kalibrierung gegen die Gerade mit einer um eine Zehnerpotenz höheren Genauigkeit. Die Kalibrierungsreferenz ermöglicht es somit, die Planität der vom abgelenkten Laserstrahl bestimmten Lichtebene exakt zu bestimmen. Referenzstrecken im Meter-Bereich sind somit nicht nötig.

In Fig. 10 ist die Ablenkjustage 18 detailliert dargestellt. Die Ablenkjustage 18 dient der Einstellung der rotierenden bzw. oszillierenden Spiegel im Lasermeßgerät 7. Mittels der Ablenkjustage wird die Spiegelneigung in der Ablenkeinheit so lange verstellt, bis die Kalibrierungsreferenz in voller Länge abgedeckt ist, d.h. die Planität des Laserstrahls gegeben ist.

Die Justage der Ablenkeinheiten 6 bzw. 9, deren Hauptelement ein rotierender bzw. oszillierender Spiegel ist, muß die Grenze zwischen zwei Mantellinien zu finden gestatten , von denen jede einen auf der Spitze - diese gegeneinander - stehenden Kegel beschreibt, wenn die Mantellinie durch einen Laserstrahl dargestellt wird.

Im Lasermeßgerät 7 stehen die Achsen der Ablenkeinheiten 6 bzw. 9 wegen der räumlichen Ausdehnung des Gerätes in nicht immer eindeutig definierten räumlichen Koordinaten zueinander. Um die Achsen der Ablenkeinheiten in eine eindeutig definierte räumliche Beziehung zueinander zu bringen, weist die Ablenkjustage 18 einen gerätefesten Drehpunkt 46 auf, der Nullpunkt für eine Translationsbewegung in zwei Achsen und eine Rotationsbewegung in drei Achsen ist. Die Ablenkjustage 18 beinhaltet eine um den gerätefesten Punkt 46 des Lasermeßgerätes 7 drehbare Welle 47 (entsprechend dem Pfeil B drehbar), die zudem um ihre eigene Achse drehbar (Pfeil C) und längsverschieblich (Pfeil D) gelagert ist und an ihrem ringförmig ausgebildeten Ende 48 eine einachsig kardanisch (Pfeil E) aufgehängte Klemmbüchse 49 trägt, die eine Hohlwelle 50 (Pfeil F) führt, deren geräteseitiges Ende einen Gleichlaufmitnehmer 51 für den Spiegelträger 52 einer Ablenkeinheit trägt und deren anderes Ende mit einer Einstellschraube 53 für den Spiegelwinkel versehen ist.

Mit der Ablenkjustage ist es somit möglich, Translationsbewegungen in zwei Achsen und eine Rotationsbewegung in drei Achsen durchzuführen. Der Gleichlauf zwischen der Ablenkjustage 18 und dem rotierenden Spiegelträger 52 der Ablenkeinheit wird durch einen als Reibkupplung wirkenden, nicht näher dargestellten O-Ring in einer rotierenden Hohlwelle sichergestellt. Nach Erreichen des Gleichlaufs wird durch eine in der Hohlwelle 50 befindliche Gewindespindel die Spiegelneigung verstellt.

Patentansprüche

1.      Lasermeßsystem, insbesondere zum Ausmessen von Einspann- und Richtvorgängen an Werkzeugmaschinen mit Werkstücken großer Abmessungen, sowie zur Schwingungsmessung an Werkstücken, d a d u r c h      g e k e n n z e i c h n e t , daß das Lasermeßsystem aus einem Lasermeßgerät, einem oder mehreren Koordinatenwächtern, einer Kalibrierungsreferenz, einem Meßbett und einer Ablenkjustage besteht.

2.      Lasermeßsystem nach Anspruch 1, dadurch gekennzeichnet, daß das Lasermeßgerät, der Koordinatenwächter, das Meßbett und die Ablenkjustage auf einem gemeinsamen Fahrgestell angeordnet sind.

3.      Lasermeßsystem nach Anspruch 1 und/oder 2, dadurch gekennzeichnet, daß das Lasermeßgerät (7) zwei Laserstrahlen (2a, 2b) aussendet, von denen der eine Laserstrahl das Meßsignal (2a) und der andere Laserstrahl das Gerätenullsignal (2b) darstellt, wobei die beiden Signale (2a, 2b) aus einem Strahlengang (2) erzeugt werden.

4.      Lasermeßsystem nach Anspruch 3, dadurch gekennzeichnet, daß das Gerätenullsignal (2b) senkrecht auf den Meßort und das Meßsignal (2a) unter einem spitzen Winkel auf den Meßort einfallen.

5.      Lasermeßsystem nach Anspruch 3 und/oder 4, dadurch gekennzeichnet, daß das eine der Signale (2a) ein moduliertes, das andere der Signale (2b) ein nichtmoduliertes Signal ist.

6.      Lasermeßsystem nach einem oder mehreren der Ansprüche 3 bis 5, dadurch gekennzeichnet, daß die Laserstrahlen (2a, 2b) in ihrer Fokussierung verändert werden können.

7.      Lasermeßsystem nach einem oder mehreren der Ansprüche 3 bis 6, dadurch gekennzeichnet, daß die Laserstrahlen (2a, 2b) Komplementär-

2

farben aufweisen.

8. Lasermeßsystem nach einem oder mehreren der
Ansprüche 3 bis 7,
dadurch gekennzeichnet, daß die Signale (2a, 2b) stroboskopisch
gespreizt sind.

9. Lasermeßsystem nach einem oder mehreren der
Ansprüche 1 bis 8,
dadurch gekennzeichnet, daß der Koordinatenwächter (19, 20) einen um
die Achse des einfallenden Laserstrahls (2a, 2b) drehbaren Drehkörper
(23) mit zwei optoelektronischen Sensoren (24) aufweist, die über
einen Verstärker zwei Meßgeräte (27, 28) ansteuern.

10. Lasermeßsystem nach Anspruch 9,
dadurch gekennzeichnet, daß die Sensoren (24) auf der Mittellinie
(25) des Drehkörpers (23) in gleichem Abstand vom Drehkörpermittelpunkt (26) angeordnet sind.

11. Lasermeßsystem nach Anspruch 9 und/oder 10,
dadurch gekennzeichnet, daß ein dritter Sensor zum Erfassen des
Tages- und/oder Fremdlichteinflusses vorgesehen ist, und alle drei
Sensoren einen Differentialverstärker ansteuern.

12. Lasermeßsystem nach einem oder mehreren der
Ansprüche 9 bis 11,
dadurch gekennzeichnet, daß die Koordinatenwächter (19, 20)
Drehkörper (23) mit Sensoren (24) für das Meßsignal (2a) und das
Gerätenullsignal (2b) aufweisen.

13. Lasermeßsystem nach einem oder mehreren der
Ansprüche 1 bis 12,
dadurch gekennzeichnet, daß auf dem Meßbett (21) eine Grundplatte (30)
mit drei Stellschrauben (31, 32, 33) in Dreiecksanordnung mit gefederten Spannelementen (34, 35) auf den Wirkungslinien des Spanndreiecks angeordnet ist, die auf einer Schiene (36) angeordnet ist.

14. Lasermeßsystem nach Anspruch 13,
dadurch gekennzeichnet, daß die Schiene als T-Schiene (36) mit
Morsekegeladapter ausgebildet in eine T-Spann-Nut einführbar ist,
wobei die Klemmung zwischen T-Schiene (36) und T-Spann-Nut durch
abgefederte Kugeln (39) bewirkt wird, deren Kalotten den Flansch (40)
und den Steg (41) der T-Schiene (36) an deren Verschneidung durchdringen.

0129062

15. Lasermeßsystem nach Anspruch 13 und/oder 14, dadurch gekennzeichnet, daß senkrecht zur Erstreckung der Schiene (36) und der Stellschrauben (31, 32, 33) zwei weitere, in Anlage mit der Schiene (36) gelangende, an der Grundplatte (30) angeordnete Stellschrauben (37, 38) vorgesehen sind.

16. Lasermeßsystem nach einem oder mehreren der Ansprüche 1 bis 15, dadurch gekennzeichnet, daß die Kalibrierungsreferenz als abgehängter, gewichtsbelasteter Draht (43) mit einem Durchmesser $d \geqq F/\cos \beta$, mit $\beta = 10$ bis $15°$ und flüssigkeitsgedämpfter Schwingung ausgebildet ist.

17. Lasermeßsystem nach Anspruch 16, dadurch gekennzeichnet, daß der Draht (43) an einem zwischen Boden (54) und Decke (55) eines Raumes einklemmbaren Bogen (42) abgehängt ist.

18. Lasermeßsystem nach einem oder mehreren der Ansprüche 1 bis 17, dadurch gekennzeichnet, daß die Ablenkjustage (18) einen gerätefesten Drehpunkt (46) aufweist, der Nullpunkt für eine Translationsbewegung in zwei Achsen (Pfeile D, F) und eine Rotationsbewegung in drei Achsen (Pfeile B, C, E) ist.

19. Lasermeßsystem nach Anspruch 18, dadurch gekennzeichnet, daß die Ablenkjustage (18) eine um einen gerätefesten Punkt (46) des Lasermeßgerätes (7) drehbare Welle (47) aufweist (Pfeil D), die zudem um ihre eigene Achse drehbar (Pfeil C) und längsverschieblich (Pfeil D) gelagert ist und an ihrem einen Ende (48) eine einachsig kardanisch aufgehängte (Pfeil E) Klemmbüchse (49) trägt, die eine Hohlwelle (50) führt (Pfeil F), deren geräteseitiges Ende einen Gleichlaufmitnehmer (51) für den Spiegelträger (52) einer Ablenkeinheit trägt, und deren anderes Ende mit einer Einstellschraube (53) für den Spiegelkippwinkel versehen ist.

20. Lasermeßsystem nach Anspruch 18 und/oder 19, dadurch gekennzeichnet, daß der Gleichlaufmitnehmer (51) eine Rutschkupplung aufweist.

FIG.1

FIG.1a

FIG.1b

FIG.1c

FIG.2

FIG.3

FIG.4

FIG.4a

FIG.4b

FIG.4c

18

19

7

20

30

21

FIG.5

27  28

24  23

29  29

26

24

25

22

20

FIG.6

0129062

FIG.7

7

Z
Y
X

32
34
33
31
35
38
36
30
37

36

A

41
40
40

39

FIG.8

A

FIG.8a

41
39
40

0129062

FIG.9a

FIG.9

FIG.10